# EUROPÄISCHE PATENTANMELDUNG

(11) **EP 4 834 453 A1**
(43) Veröffentlichungstag der Anmeldung: **04.11.2026**
(21) Anmeldenummer: 26175888.2
(22) Anmeldetag: 30.04.2026
(51) Int. Cl.: B01D 11/02, D21B 1/12, D21B 1/34, B01F 27/60, C13B 10/10, D21B 1/32

(54) **VERFAHREN ZUM BEARBEITEN VON MATERIAL IN EINEM PERKOLATOR UND PERKOLATOR MIT EINER FLÜSSIGKEITSZUFUHR, EINEM REAKTIONSRAUM FÜR MATERIAL MIT EINEM FÖRDERORGAN, EINEM SIEB UND EINEM PERKOLATAUSLASS**

(30) Priorität: 02.05.2025 DE 102025001488; 11.09.2025 DE 102025003135
(71) Anmelder: Boltersdorf, Hans-Joachim, 56656 Brohl-Lützing (DE)
(72) Erfinder: Boltersdorf, Hans-Joachim, 56656 Brohl-Lützing (DE)
(74) Vertreter: Castell, Klaus

(57) **Zusammenfassung**

Die Erfindung betrifft ein Verfahren zum Bearbeiten von Material in einem Perkolator mit einem Reaktionsraum, in dem ein Förderorgan angeordnet ist, und einer Flüssigkeitszufuhr und einen Perkolator mit einer Flüssigkeitszufuhr, einem Reaktionsraum für Material mit einem Förderorgan, einem Sieb und einem Perkolatauslass.

## Beschreibung

Die Erfindung betrifft ein Verfahren zum Bearbeiten von Material in einem Perkolator mit einem Reaktionsraum, in dem ein Förderorgan angeordnet ist, und einer Flüssigkeitszufuhr und einen Perkolator mit einer Flüssigkeitszufuhr, einem Reaktionsraum für Material mit einem Förderorgan, einem Sieb und einem Perkolatauslass.

Die internationale Anmeldung WO 2022/1943115 A1 beschreibt einen Kneter mit einem Reaktionsraum, in dem ein Rührer angeordnet ist. Unter dem Rührer ist ein Boden mit einem Lochblech und oberhalb des Reaktionsraumes ist eine Bewässerungseinrichtung für eine Perkolation. Dies ermöglicht es, während des Knetens das Substrat, das beispielsweise als Masse aus Reststoffen und Zusatzstoffen gebildet ist, mit Wasser zu besprühen oder zu beträufeln, sodass das Wasser die Zusatzstoffe ausspülen kann und dann mit dem Perkolat den Kneter verlässt.

Dieses Verfahren ermöglicht eine effektive Perkolation.

Ausgehend von diesem Stand der Technik liegt der Erfindung die Aufgabe zu Grunde, das Verfahren der Perkolation zu beschleunigen. Diese Aufgabe wird mit einem Verfahren gemäß Patentanspruch 1 und einem Perkolator mit den Merkmalen des Patentanspruchs 10 gelöst.

Der Erfindung liegt die Erkenntnis zu Grunde, dass der Rührer als Förderorgan verwendet werden kann, um mit ihm die Entnahme von Material aus dem Reaktionsraum zu ermöglichen.

Bekannte Perkolatoren werden befüllt, als Perkolator eingesetzt und danach entleert. Dieser Vorgang ist zeitaufwendig. Erfreulicherweise ermöglicht es der Einsatz des Rührorgans als Förderorgan, einen Perkolator auch kontinuierlich zu betreiben.

Vorteilhaft ist es, wenn bei der Verwendung des Perkolators nur so viel Flüssigkeit zugegeben wird, dass im Reaktionsraum kein Flüssigkeitsspiegel ansteigt. Das Material bleibt somit feucht genug, damit man es mit angemessenem Energieaufwand umwälzen kann und es ist nicht so nass, dass im Perkolator ein Flüssigkeitsspiegel ansteigt. Die Flüssigkeitszufuhr sollte dabei so eingestellt werden, dass die Flüssigkeit in das Material hineingemischt und über die Materialoberfläche abfließen kann.

Konstruktiv und verfahrenstechnisch ist es vorteilhaft, wenn Flüssigkeit von der Flüssigkeitszufuhr zuerst auf eine innere Oberfläche des Reaktionsraums gegeben wird und von dort zum Material gelangt. Vorteilhaft ist es, wenn die Flüssigkeit derart auf die innere Oberfläche gespritzt wird, dass sie von dort abperlt und dann fein verteilt und möglichst weit oben auf die Oberfläche des zu behandelnden Materials gelangt. Vorteilhaft ist es aber auch, wenn die Flüssigkeit durch ein Sieb im Perkolator in den Reaktionsraum gelangt. Dabei kann die Flüssigkeit an der Innenfläche des Perkolators da zu behandelnde Material direkt benetzen. Als Flüssigkeit kann auch Dampf verwendet werden, der in der Berührung mit dem Material zu einer Flüssigkeit wird.

Eine einfache Entladung des Perkolators wird dadurch erzielt, dass das Material mit dem Förderorgan durch einen Materialauslass im Reaktionsraum gefördert wird.

Insbesondere wenn der Perkolator ein rundes Gefäß ist und das Förderorgan ein sich um eine zentrale Achse des Gefäßes drehender Rührer ist, ist es vorteilhaft, wenn das Material tangential entnommen wird, da dann mit dem Förderorgan das Material auf einfache Art und Weise zum Materialauslass gedrückt werden kann.

Das erfindungsgemäße Verfahren eignet sich für einen Perkolator mit einem einzelnen Gefäß. Der Perkolator kann jedoch auch mehrere Gefäße aufweisen. Dies ermöglicht ein Verfahren, bei dem das Material in einem Perkolator mit mehreren Reaktionsräumen bearbeitet wird und in einer speziellen Ausführungsvariante auch in einem Reaktionsraum mit Perkolat aus einem anderen Reaktionsraum perkoliert wird.

Dabei ist es besonders vorteilhaft, wenn zwischen den Reaktionsräumen ein Eindicker angeordnet ist. Der erste Reaktionsraum kann dann als Makroperkolator zum Abwaschen gröberer Bestandteile verwendet werden und der zweite Perkolator kann wiederum von den abgewaschenen Materialien feinere Materialien abtrennen.

Anstelle von zwei getrennten Gefäßen können als Perkolator auch hintereinander angeordnete Reaktionsräume verwendet werden. Dabei ist es vorteilhaft, wenn das Förderorgan das Material von einem Eingang durch mehrere Reaktionsräume zu einem Materialauslass fördert. Dies kann beispielsweise eine längere Förderschnecke mit mehreren Bereichen sein. Die unterschiedlichen Reaktionsräume erlauben es, auch das Verfahren im Gegenstrom durchzuführen. Die Reaktionsräume können jeweils eine Flüssigkeitszufuhr aufweisen und die Flüssigkeitszufuhr zu einem näher am Eingang liegenden Reaktionsraum kann mit Perkolat aus einem weniger nahe am Eingang angeordneten Reaktionsraum gespeist werden.

Diese kontinuierliche Behandlung in unterschiedlichen Räumen kann auch mit einem Wandersiebboden erzielt werden, auf dem das Material gefördert wird, während es perkoliert wird. Auf der Förderstrecke können verschiedene Bereiche betrachtet werden, die jeweils von oben mit Flüssigkeit beträufelt werden, während unten Perkolat abgezogen wird. Dieses Perkolat kann auch für einen anderen und insbesondere den daneben liegenden Raum zum Beträufeln verwendet werden.

Insbesondere für das beschriebene Verfahren eignet sich ein Perkolator mit einer Flüssigkeitszufuhr, einem Reaktionsraum für Material mit einem Förderorgan, einem Sieb und einem Perkolatauslass. Erfindungsgemäß weist der Reaktionsraum einen Materialauslass auf, der derart angeordnet ist, dass das Förderorgan zu ihm Material für eine Entnahme aus dem Reaktionsraum bewegt.

Das Förderorgan kann ein linearer Förderer wie eine Schnecke sein. Insbesondere für einen runden Reaktionsraum eignet sich als Förderorgan ein Umwälzorgan.

Eine einfache Entnahme wird dadurch erzielt, dass der Materialauslass im Sieb angeordnet ist.

Insbesondere wenn als Förderorgan ein Umwälzorgan vorgesehen ist, ist es vorteilhaft, wenn an den Materialauslass ein tangentialer Kanal anschließt.

Während das Förderorgan das Material zum Materialauslass und dem tangentialen Kanal fördert, ist es vorteilhaft, wenn an den tangentialen Kanal eine Förderschnecke anschließt.

Da in der Regel unter einem Perkolator wenig Platz ist, ist es vorteilhaft, wenn der Perkolatauslass mehrere in einer Ebene liegende Trichter aufweist.

Insbesondere für einen runden Reaktionsraum ist es vorteilhaft, wenn das Sieb konisch geformt ist.

Eine besondere Ausführungsform des Perkolators sieht vor, dass er mehrere Reaktionsräume aufweist, wobei jeweils eine Flüssigkeitszufuhr zu einem Reaktionsraum mit einem Perkolatauslass eines anderen Reaktionsraums verbunden ist. Dies erleichtert eine Gegenstromperkolation und ein schnelles kontinuierliches Perkolieren.

Eine Ausführungsvariante sieht vor, dass die Reaktionsräume in unterschiedlichen Gefäßen mit jeweils einem Förderorgan sind. Die Reaktionsräume können jedoch auch linear angeordnet sein und das gleiche Förderorgan aufweisen.

Um das Permeat parallel zum Förderorgan ablaufen zu lassen, können die Reaktionsräume und das Förderorgan auf einer ansteigenden bzw. abfallenden Linie angeordnet sein. Je nach Anwendungsfall kann es auch vorteilhaft sein, wenn Reaktionsräume und Förderorgan waagerecht nebeneinander angeordnet sind.

Eine spezielle Ausführungsvariante sieht vor, dass das Förderorgan ein Antrieb zur Bewegung des Siebes ist. Dies ermöglicht es, einen bekannten Wandersiebboden mit darüber angeordneten Bereichen, die als Reaktionsräume dienen, für eine Perkolation zu verwenden. Während das Material auf dem Wandersiebboden kontinuierlich von einem Eingang zu einem Ausgang geführt wird, gelangt von oben Flüssigkeit auf das Material und unten wird Perkolat abgezogen.

Bei einem derartigen Wandersiebboden können ebenso wie bei einem Förderschneckenperkolator über dem Sieb mehrere Reaktionsräume angeordnet sein. Diese Reaktionsräume müssen nicht mit Wänden abgegrenzte Räume sein. Unter Reaktionsraum wird der Bereich verstanden, in dem die Perkolation als Reaktion durchgeführt wird. Beispielsweise bei einem Wandersiebboden können dies auch Bereiche zwischen Flüssigkeitszufuhr und Perkolatabfuhr sein, die nebeneinander liegen, aber nicht durch Wände voneinander getrennt sein müssen.

Die Nutzung mehrerer Reaktionsräume erlaubt es, mindestens eine Flüssigkeitszufuhr eines Reaktionsraumes mit einem Perkolatauslass eines anderen Reaktionsraumes in Verbindung zu setzen.

Dadurch kann auch eine Behandlung im Gegenstrom realisiert werden. Hierfür ist es vorteilhaft, wenn ein Perkolatauslass eines dem Materialauslass näheren Reaktionsraumes mit einer Flüssigkeitszufuhr eines vom Materialauslass weiter entfernten Reaktionsraumes verbunden ist.

Mehrere Ausführungsbeispiele derartiger Perkolatoren sind in der Zeichnung dargestellt und werden im Folgenden näher beschrieben. Es zeigt
- Figur 1: eine Seitenansicht eines Perkolators,
- Figur 2: eine Seitenansicht des in Figur 1 gezeigten Perkolators,
- Figur 3: die Kombination von zwei Gefäßen als Reaktionsraum für eine Perkolation,
- Figur 4: einen schrägen Schneckenperkolator,
- Figur 5: einen waagerechten Schneckenperkolator,
- Figur 6: einen Wandersiebbodenperkolator in der Draufsicht,
- Figur 7: einen Kleinperkolator,
- Figur 8: den in Figur 7 gezeigten Kleinperkolator mit geöffnetem Deckel,
- Figur 9: einen Schnitt durch den in Figur 7 gezeigten Kleinperkolator,
- Figur 10: eine spezielle Ausführungsform eines Suspendierers,
- Figur 11: einen Schnitt durch den in der Figur 10 gezeigten Suspendierer,
- Figur 12: schematisch die Schwerteilabtrennung mit einem Zyklon,
- Figur 13: schematisch den Einsatz der Waschtrommel,
- Figur 14: eine perspektivische Ansicht eines verbesserten Perkolators,
- Figur 15: einen Schnitt durch den in der Figur 14 gezeigten Perkolator,
- Figur 16: ein Detail aus dem in der Figur 15 gezeigten Schnitts,
- Figur 17: einen Zyklon als Cleaner im kontinuierlichen Einsatz,
- Figur 18: eine Ansicht eines Details aus Figur 17 in geschnittener Darstellung,
- Figur 19: den in der Figur 17 gezeigten Cleaner im diskontinuierlichen Einsatz,
- Figur 20: eine schematische Ansicht einer Chargenaufbereitung und
- Figur 21 bis 24: schematisch ein Fließschema zur Aufbereitung mit einem Perkolator.

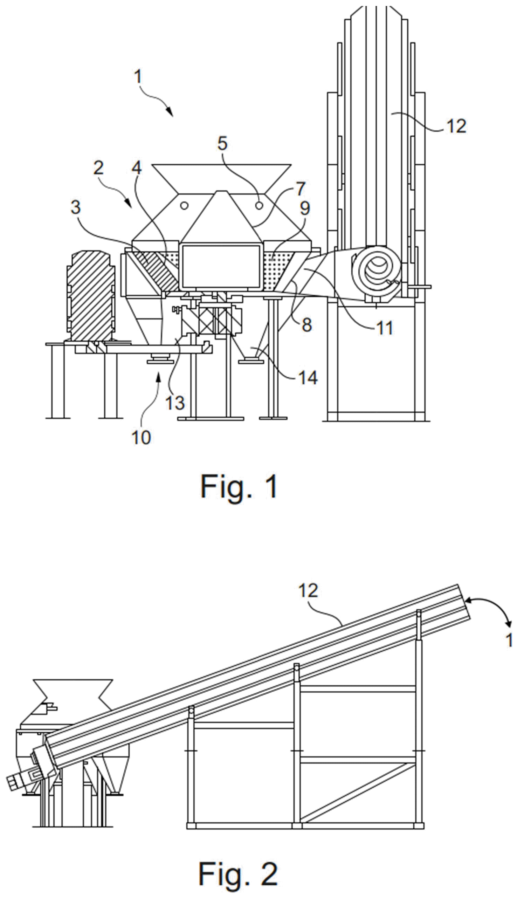

Der in Figur 1 gezeigte Perkolator 2 hat eine obere Öffnung für Material 1, das in den Reaktionsraum 3 des Perkolators 2 gegeben werden kann. Im Perkolator ist ein Umwälzorgan als Rührer und Förderorgan 4 vorgesehen, der das Material über das konisch angeordnete Sieb 9 schiebt. Hierbei entsteht eine Umwälzbewegung des Materials um eine sich parallel zum Sieb erstreckende Achse. Sodass Material, das innerhalb des Reaktionsraumes im Kreis bewegt wird, gleichzeitig um diese Achse zum Sieb und vom Sieb wieder wegbewegt wird.

Über die Flüssigkeitszufuhr 5 gelangt Flüssigkeit auf eine innere Oberfläche 7 des Reaktionsraumes, die sich um die zentrale Achse des Förderorgans herum erstreckt. Dort prallt die Flüssigkeit ab und gelangt auf das Material 1. Sie fließt dann durch das Material 1 und das Sieb 9 zu dem Perkolatauslass 10. Der Perkolatauslass 10 wird von mehreren in einer Ebene liegenden Trichtern 13, 14 gebildet. Der Materialauslass 8 liegt im konisch ausgebildeten Sieb und führt über einen tangentialen Kanal 11 zu einer Förderschnecke 12.

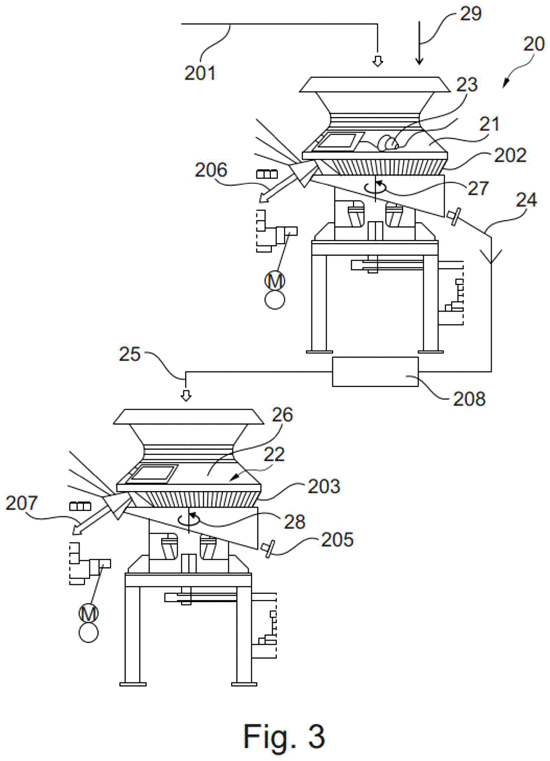

Die Figur 3 zeigt einen Perkolator 20 mit zwei Reaktionsräumen 21 und 22. Das Material 201 gelangt von oben in den ersten Reaktionsraum 21 und wird dort mit dem Förderorgan, das als Umwälzorgan ausgebildet ist, umgewälzt, während über die Flüssigkeitszufuhr 29 Flüssigkeit auf das Material 201 gelangt. Die Flüssigkeit fließt im Reaktionsraum 21 in das Material hinein und durch das Sieb 202 hindurch zum Perkolatauslass 24, während das Material durch einen Kanal im Sieb 202 hindurch zum Materialauslass 206 gelangt.

Vom Perkolatauslass 24 gelangt das Perkolat über einen Eindicker 208 als Inputmaterial 25 in den Reaktionsraum 22 in dem das Material mit dem Förderorgan 28 umgewälzt wird. Der Perkolator 20 hat somit die zwei Gefäße 23 und 26, die als Reaktionsräume 21 und 22 dienen und in denen jeweils mit einem Förderorgan 27, 28 das Material 201, 25 umgewälzt wird. Im zweiten Reaktionsraum 22 gelangt das Perkolierwasser als Perkolat durch das Sieb 203 zum Perkolatauslass 205. Das Material 25 verlässt gereinigt durch den Materialauslass 207 den Reaktionsraum 22.

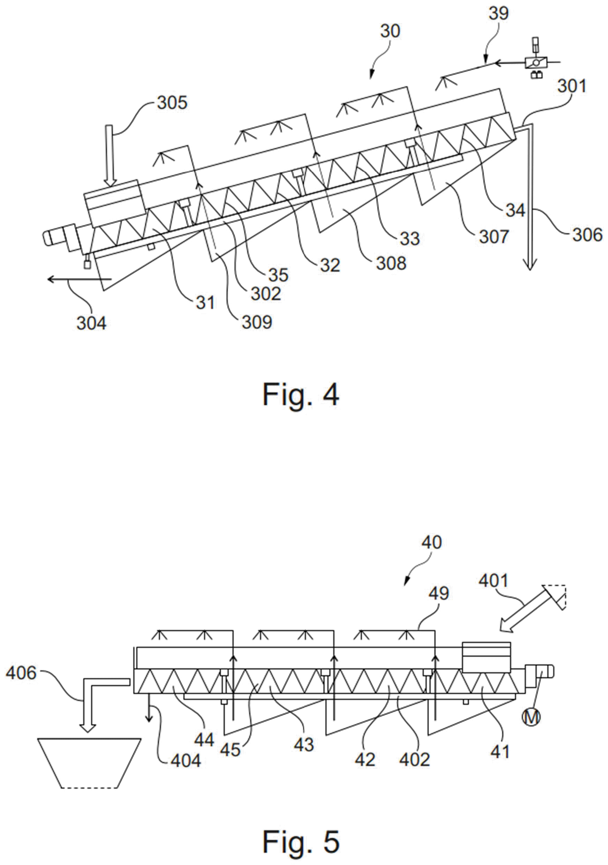

Auch die Figur 4 zeigt einen Perkolator. Bei diesem Perkolator 30 ist das Förderorgan die Schnecke 35, die das Material 301 vom Materialeingang 305 zu einem Materialauslass 306 durch die Reaktionsräume 31, 32, 33, 34 fördert.

Dabei wandert das Material 301 über ein Sieb 302 und Perkolat gelangt durch das Sieb zum Perkolatauslass 304. Die Flüssigkeitszufuhr 39 am oberen Ende der Förderschnecke 35 sprüht Flüssigkeit auf das Material 301 im Reaktionsraum 34. Die Flüssigkeit gelangt danach durch das Sieb 302 in einen Perkolatfang 307. Von dort wird die Flüssigkeit abgezogen und auf das Material 301 im zweiten Reaktionsraum 33 gesprüht. Auch hier gelangt die Flüssigkeit wieder durch das Sieb 302 in einen Perkolatfang 308 und von dort wird abgezogene Flüssigkeit auf das Material 301 im dritten Reaktionsraum 32 gesprüht, von wo es durch das Sieb 302 in den Perkolatfang 309 gelangt. Von dort abgezogen, gelangt Perkolat als Flüssigkeit auf das Material 301 im ersten Reaktionsraum 31 und durch das Sieb 302 zum Perkolatauslass 304.

Die Figur 5 zeigt eine waagerechte Anordnung, bei der das Material 401 in den ersten Reaktionsraum 41 gelangt und von dort durch die Reaktionsräume 42 und 43 zum Reaktionsraum 44 und zum Materialauslass 406 gelangt. Die Flüssigkeitszufuhr führt von oben Flüssigkeit auf die Reaktionsräume und wird letztlich am Perkolatauslass 404 wieder abgezogen, während das Material zum Materialauslass 406 gefördert wird.

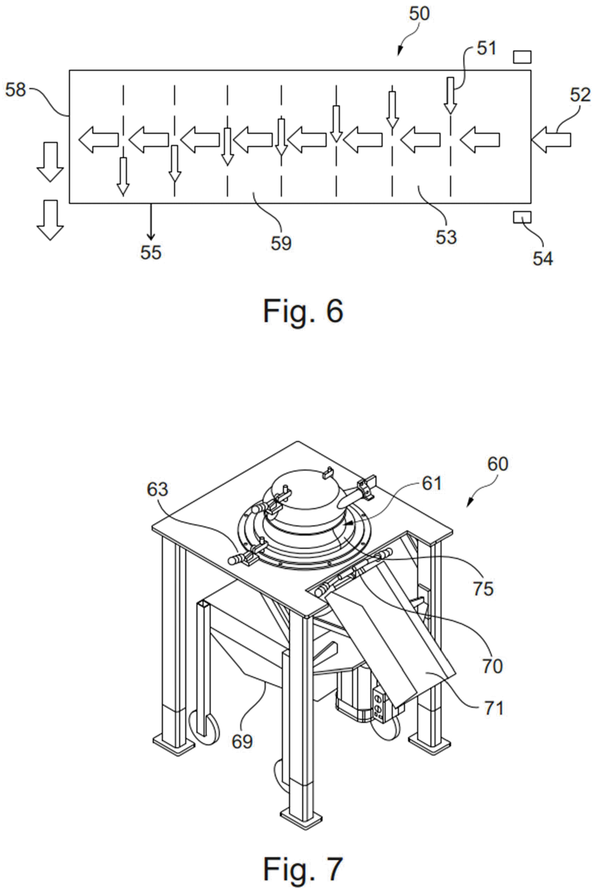

Letztlich ist auch der in der Figur 6 gezeigte Wandersiebboden ein erfindungsgemäßer kontinuierlicher Perkolator 50. Hier gelangt Material 52 auf den Siebboden 59, der über das Förderorgan 54 angetrieben ist und das Material zum Materialauslass 58 fördert, derweil wird mittels der Flüssigkeitszufuhr 51 Flüssigkeit auf das Material gesprüht, die im Reaktionsraum 53 am Material entlang fließt und durch das Sieb 59 zum Perkolatauslass 55 gelangt. Dies führt dazu, dass sauberes Perkolierwasser dem System am Ende der Wanderperkolation zugeführt wird und mit Schmutz angereichertes Perkolat dem System am Ende entnommen wird.

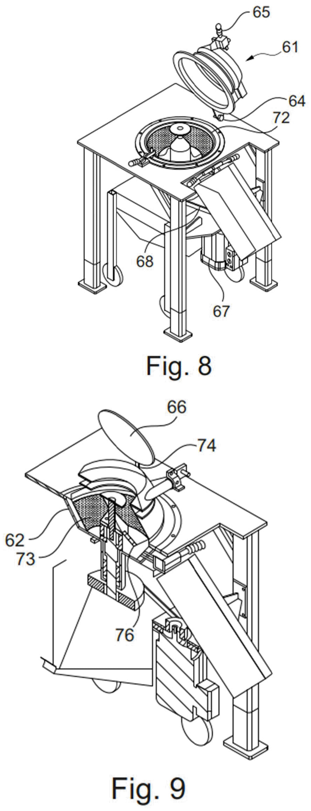

Der in den Figuren 7 bis 9 gezeigte Kleinperkolator 60 hat ein herausnehmbares Sieb 72. Zum Auswechseln des Siebes 72 ist ein Oberteil 61 von einen Unterteil 62 des Perkolator 60 abnehmbar. Das Siebblech 72 kann individuell gestaltet werden. Vorteilhaft ist es, wenn nur am Boden des Siebes Löcher vorgesehen sind. Das Sieb kann somit eine Platte mit Löchern sein oder schüsselförmig ausgebildet sein. Bei einer schüsselförmigen Ausbildung können auch wie im Ausführungsbeispiel gezeigt nur die schrägen Wandbereiche 73 gelocht, bereichsweise gelocht oder undurchlässig sein.

Das Oberteil 61 ist mit einer Klemme 63 und einem Scharnier 64 lösbar am Unterteil 62 befestigt. Am Oberteil 61 ist ein Deckel 66 angebracht, der wiederum mit einer Klemme 65 und einem Scharnier 74 befestigbar ist.

Am Oberteil 61 und/oder am Unterteil 62 sind als Sichtöffnungen durchsichtige Scheiben 75 angebracht. Dies ermöglicht es, den Ablauf im Perkolator zu beobachten. Anstelle von Scheiben 75 können im Oberteil 61 auch offene oder öffenbare Öffnungen vorgesehen sein, die als Sichtöffnungen verwendet werden können und über die man auch eingreifen kann, um zu besprühen oder um Proben zu entnehmen.

Im Perkolator 60 wälzt ein Rührorgan 76 das Material um. Dieses Rührorgan 76 wird von einem Motor 67 über einen Keilriemen 68 angetrieben. Dabei wird das Material von oben besprüht.

Durch das Sieb 72 fließende Stoffe gelangen in den fahrbar angeordneten Auffangbehälter 69 und die restlichen Stoffe werden mit dem Rührorgan zum Auslass 70 gefördert und gelangen auf die Rutsche 71, um in einem anderen Behälter (nicht gezeigt) aufgefangen zu werden.

Neben der Reihenschaltung zweier Perkolatoren (zur Gewinnung und Reinigung von Faserstoff) stellt auch die Parallelschaltung einen vorteilhaften Ansatz dar, nämlich als Pulpersystem mit integrierter Spuckstoffaufbereitung.

Die beiden Perkolatoren hätten diesem Fall jeweils einen Reaktionsraum mit einem Förderorgan. Es können sogar identische Reaktionsräume vorgesehen werden.

Der erste Reaktionsraum würde als Pulper fungieren, der die Produktion einer Altpapier verarbeitenden Papier-, Karton- oder Pappenfabrik kontinuierlich bediente.

Der zweite Reaktionsraum liefe als Makroperkolator, Entstoffer oder Wäscher zur Gewinnung von Begleitstoff, insbesondere Kunststoff - und zwar in Batchfahrweise.

Umgeschaltet vom kontinuierlichen Betrieb auf den Batchbetrieb oder vom ersten auf den zweiten Reaktionsraum würde dann, wenn der erste Reaktionsraum die Produktion nicht mehr aufrechterhalten könnte. Dies wäre dann der Fall, wenn sich im ersten Reaktionsraum derart viele Begleitstoffe im Oberkorn angesammelt haben, dass der Stofffluss des abfließenden Faserstoffs eine notwendige Größe unterschreitet.

Der erste Reaktionsraum für den kontinuierlichen Betrieb kann ein Pulper ohne Flüssigkeitszufuhr sein. Je nach Materialzustand ist es aber vorteilhaft, wenn Wasser zugegeben wird, um die Stoffdichte auf ein vorher bestimmtes Maß zu bringen. Wenn als Material Spuckstoff zugegeben wird, der trocken, stark komprimiert und verklumpt ist, sollte bereits am Anfang des Verfahrens so viel Wasser zugegeben werden, dass die Gesamtstoffdichte auf etwa 30 % sinkt.

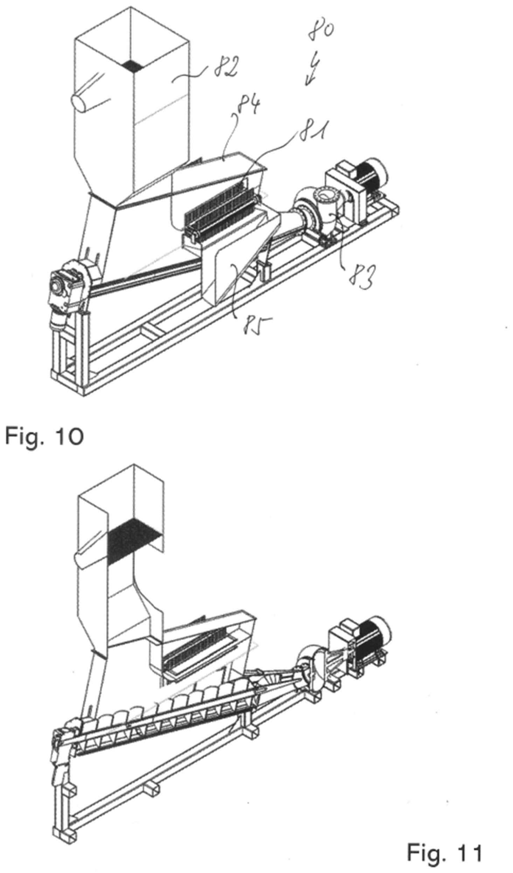

Der in der Figur 10 gezeigte Suspendierer 80 erlaubt es mit einem quer zum Stoffstrom bewegten Rechen 81 aus einem über einen Bunker 82 zu einer Pumpe 83 fließenden Stoffstrom aufschwimmende Partikel abzuschöpfen. Der Rechen 81 bewegt die in einer Wanne 84 aufschwimmenden Partikel, um sie in eine Rutsche 85 zu schieben. Dadurch können großstückige Styroporpartikel zur Weiterbehandlung abgeschöpft werden. Dadurch kann die Recyclingquote erhöht werden und bei der weiteren Verarbeitung störender Schwimmstoff kann aus dem Prozess ferngehalten werden.

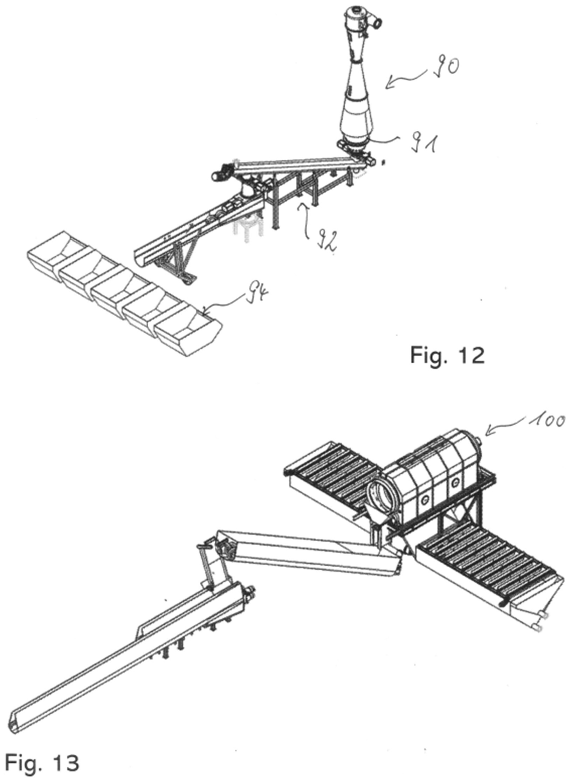

Im weiteren Prozess werden, wie in der Figur 12 gezeigt, mit einem Zyklon 90 am unteren Ende 91 des Zyklons 90 Schwerstoffe kontinuierlich ausgetragen und über eine Förderstrecke 92 in Behälter 94 gefördert. Der Stoffstrom wird kontinuierlich fraktioniert, ausgetragen und automatisch separiert. Dies führt zu einer höheren Trennschärfe durch weniger Unruhe im Zyklon und einem mechanisierten automatischen Prozess.

Die in der Figur 13 gezeigte Waschtrommel 100 hat eine angeschlossene Aufbereitung der Unterläufe sowie eine Aerosolaufbereitung. Hier wird der Effekt des Düse-Pralltellersystems ausgenutzt, bei dem durch die extreme Aufschäumung sehr kleine Lustbläschen erzeugt werden. Den entstehenden Aerosolen können dadurch die wasserdampfflüchtigen Stoffe (insbesondere organischen Säuren) entzogen werden, um sie zu entsorgen. Dies ist eine Prozesswasserreinigungsmaßnahme. Aus dem abfließenden Schaum kann für das werkstoffliche Recycling kleinstückiges Styropor gewonnen werden. Außerdem können mit dem Schaumwasser störende Tenside abgetrennt und entsorgt werden. Dies erhöht die Qualität des Faserstoffs und spart Chemikalien zur Wasserentschäumung. Die Waschtrommel bedarf keiner Siebbestückung, da bereits ein einfacher geschlossener Zylinder die gleiche Möglichkeit bietet.

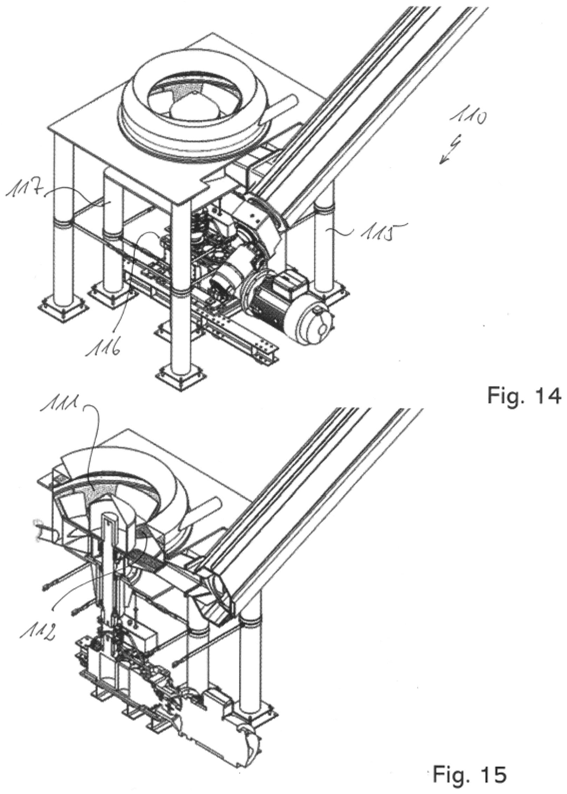

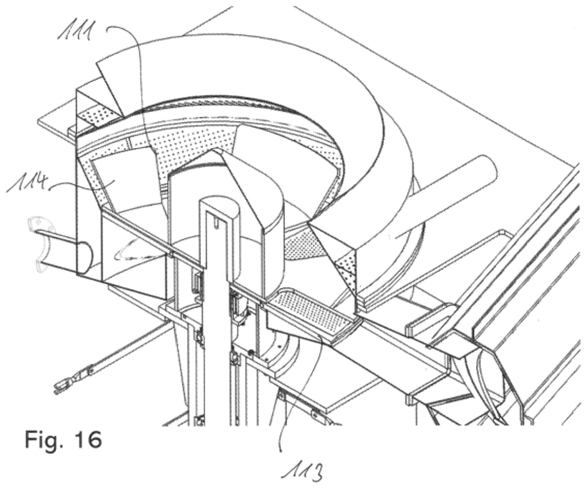

Der in den Figuren 14 bis 16 geigte Perkolator 110 nutzt gleichzeitig die seitlichen Lochbleche 111 sowie die Bodenbleche 112, sowohl für die Makrogewinnung von Faserstoff als auch die Mikro-Reinigung des Faserstoffs durch die Perkolation. Wasser oder Nassdampf wird zur gleichzeitigen Hygienisierung nicht mehr von oben, sondern seitlich über die Lochbleche zugeführt. Dies führt zu einer höheren Effektivität und Effizienz. Der Aufbau mit der ebenen Grundfläche 113 ermöglicht es, Schaufeln 114 in beliebig langer Form zu verwenden, um Perkolatoren mit dem gleichen Unterbau nahezu beliebig groß zu bauen. Der Perkolator 110 kann damit ohne viel Aufwand vergrößert werden. Der Perkolator 110 wird in einem eigenen äußeren Gestell 115 gehalten, während der Antrieb 116 in einem eigenen inneren Gestell 117 gehalten wird. Die Trennung von Körper- und Antriebsmasse durch getrennte Gestelle hat den Vorteil, dass die Eigenschwingungen in nahezu beliebig höhere Drehzahlbereiche verschoben werden können, was zur Schwingungsarmut beiträgt. Vorteilhaft sind Spannschlösser und eine Bodenlagerung über Dehnschrauben.

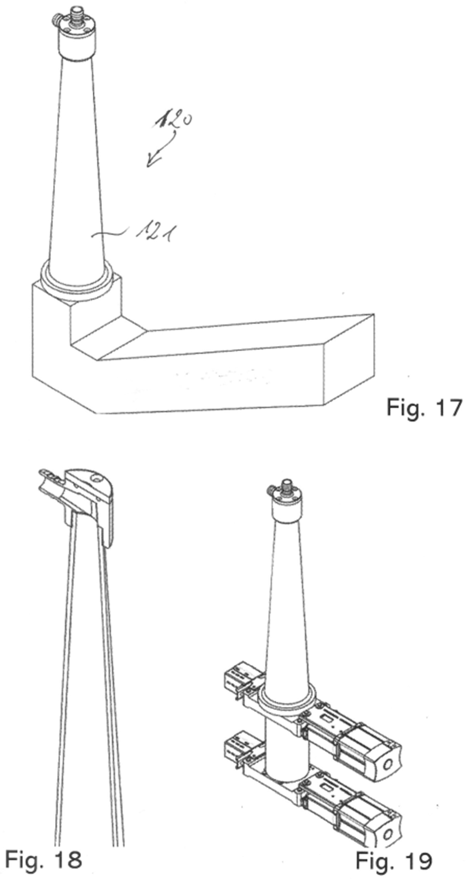

Bei dem in den Figuren 17 und 18 gezeigten Cleaner 120 wird der Massenstrom, im Gegensatz zu herkömmlichen Cleanern, nicht in einem konkaven, sondern einem konvexen Kegelstumpf 121 eingeschossen. Dadurch werden die Schwerstoffe in nahezu beliebig viele ruhende Zonen hineingezwungen, wo sehr hohe Trennschärfen erreicht werden. Dies gilt auch für Stoffe, deren spezifische Dichten nur sehr wenig differieren.

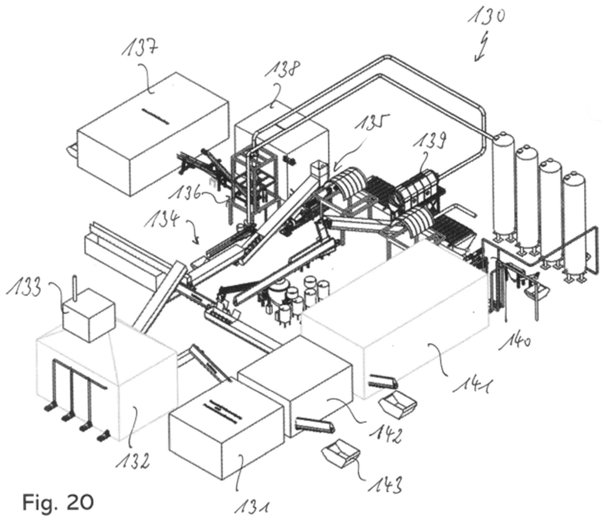

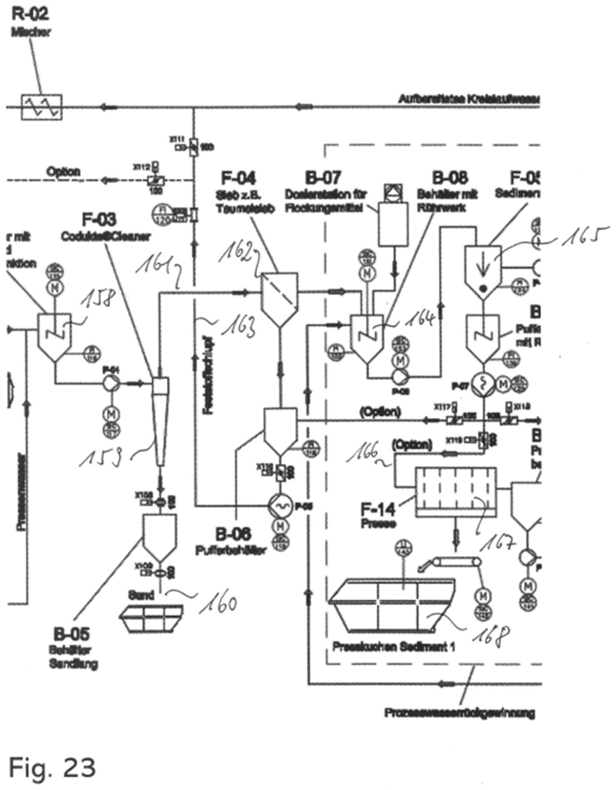

Die Figur 20 und die Figuren 21 bis 24 zeigen eine Prozesswasseraufbereitung, bei der durch eine 2-stufige Aufbereitung mit 2 verschiedenen Flockungsmitteln der wertvolle Feinstoff zurückgewonnen wird. Dadurch wird eine nochmalige Erhöhung der Recyclingquote sowie eine Verbesserung der Papierqualität durch eine Erhöhung der Festigkeitseigenschaften erreicht.

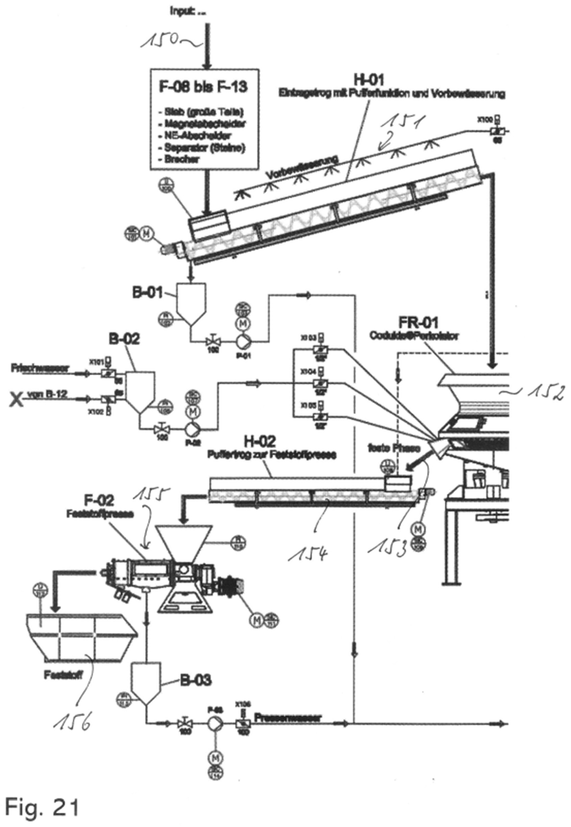

Die Figur 21 beschreibt die Materialbehandlung 130, die bei der Vorschaltanlage für die Trockenaufbereitung 131 beginnt. Von dort gelangt das Material in einen Wanderperkolator 132 mit einer Abluftbehandlung 133. Über mehrere Förder- und Pufferanlagen 134 gelangt das Material in den Suspendierer 135. Ein Zyklon 136 scheidet Schwerstoffe ab, die zu einer Schwerstoffaufbereitung 137 gefördert werden. Daneben ist eine Anlage 138 zur Aufbereitung von grobstückigem Styropor angeordnet. Vom Suspendierer 135 gelangt das Material in die Waschtrommel 139 mit Abluftbehandlung, dann in die Faserstoffaufbereitung 140 und weiter zur Faserstoffmikroreinigung 141. Eine Feinreinigung 142 mittels Perkolation und Cleaning ermöglicht die Abscheidung beispielsweise von Polyolefinen 143.

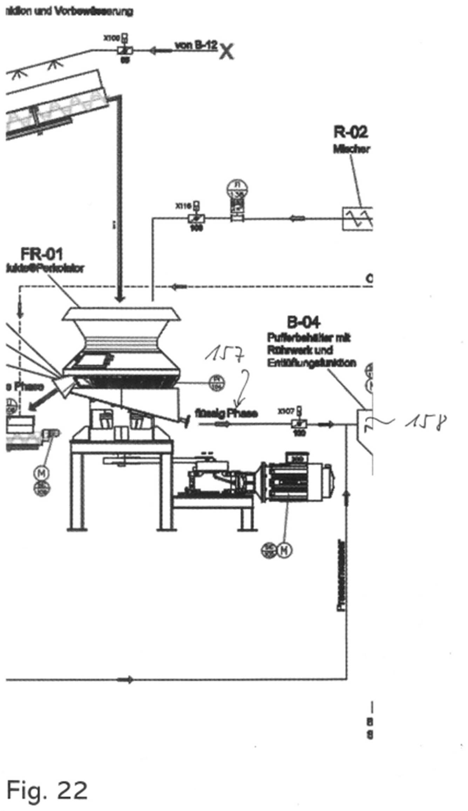

Das in den Figuren 22 bis 24 gezeigte Schema beginnt mit dem Eintrag 150 der Reststoffe. Hier kann dem Prozess ein Sieb für sehr grobe Teile, ein Magnetabscheider, ein Nicht-Eisen-Abscheider, ein Separator für Steine und ein Brecher vorgeschaltet sein.

Die erste Perkolationsstrecke 151 dient als Eintragstrog mit Pufferfunktion und Vorbewässerung. Danach gelangt das Material in ein Mikroperkolationssystem 152, in dem eine feste Phase 153 als gereinigter Faserstoff abgetrennt wird. Diese feste Phase 153 gelangt über einen Puffertrog 154 zu einer Feststoffpresse 155, in der Feststoff 156 von Wasser getrennt wird.

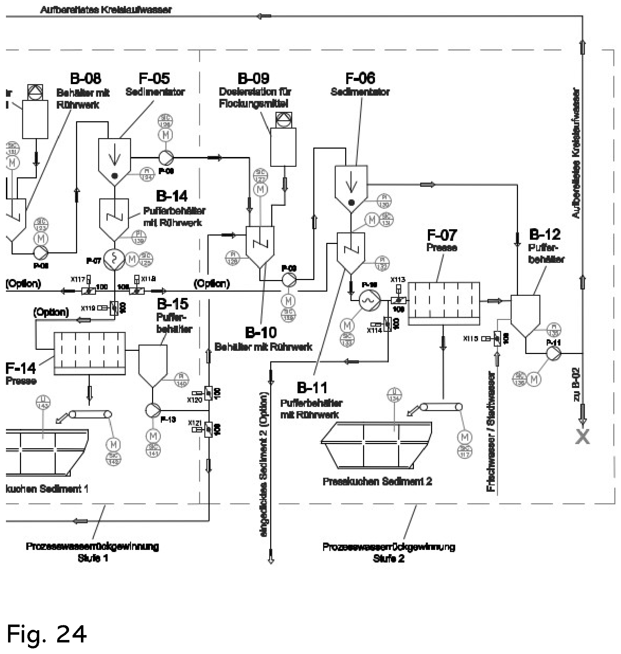

Die flüssige Phase 157 (vgl. Fig. 22) gelangt als Mikroperkolat zu einem Pufferbehälter 158 mit Rührwerk und Entlüftungsfunktion und von dort zum Zyklon 159, in dem bei einer Cleanerung Feststoffe 160, wie insbesondere Sand, abgetrennt wird. Die andere Phase 161 wird einem Sieb 162 zur Faserschlupfrückgewinnung zugeführt. Der Schlupf 163 wird zurück in den Perkolator 152 geführt und der Rest über ein Rührwerk 164 in einen Sedimentator 165, in dem über eine Flockung wertvolle Feinstoffe zurückgewonnen werden. Das Sediment 166 gelangt optional über eine Presse 167 in einen Container 168. Dieser Prozess ist zweistufig abgebildet und die Figur 24 zeigt die entsprechend funktionierende zweite Stufe.

## Patentansprüche

1. Verfahren zum Bearbeiten von Material (1, 201, 301, 401, 52) in einem Perkolator (2, 20, 30, 40, 50) mit einem Reaktionsraum (3, 21, 22, 31, 32, 33, 34, 41, 42, 43, 44, 53), in dem ein Förderorgan (4, 27, 28, 35, 45, 54) angeordnet ist, und einer Flüssigkeitszufuhr (5, 25, 29, 39, 49. 51), ***dadurch gekennzeichnet, dass*** kontinuierlich Material (1, 201, 301, 401, 52) zugeführt und entnommen wird.

2. Verfahren nach einem Anspruch 1, ***dadurch gekennzeichnet, dass*** nur so viel Flüssigkeit zugegeben wird, dass im Reaktionsraum (3, 21, 22, 31, 32, 33, 34, 41, 42, 43, 44, 53) kein Flüssigkeitsspiegel ansteigt.

3. Verfahren nach einem der vorhergehenden Ansprüche, ***dadurch gekennzeichnet, dass*** das Material (1, 201, 301, 401, 52) mit dem Förderorgan (4, 27, 28, 35, 45, 54) durch einen Materialauslass (8, 206, 207, 306, 406, 58) im Reaktionsraum (3, 21, 22, 31, 32, 33, 34, 41, 42, 43, 44, 53) gefördert wird.

4. Verfahren nach einem der vorhergehenden Ansprüche, ***dadurch gekennzeichnet, dass*** das Material (1, 201, 301, 401, 52) tangential entnommen wird.

5. Verfahren nach einem der vorhergehenden Ansprüche, ***dadurch gekennzeichnet, dass*** das Material (1, 201, 301, 401, 52) in einem Perkolator (2, 20, 30, 40, 50) mit mehreren Reaktionsräumen (3, 21, 22, 31, 32, 33, 34, 41, 42, 43, 44, 53) bearbeitet wird und in einem Reaktionsraum (3, 21, 22, 31, 32, 33, 34, 41, 42, 43, 44, 53) mit Perkolat aus einem anderen Reaktionsraum (3, 21, 22, 31, 32, 33, 34, 41, 42, 43, 44, 53) perkoliert wird.

6. Verfahren nach Anspruch 5, ***dadurch gekennzeichnet, dass*** zwischen den Reaktionsräumen (3, 21, 22, 31, 32, 33, 34, 41, 42, 43, 44, 53) ein Eindicker (208) angeordnet ist.

7. Verfahren nach Anspruch 5 oder 6, ***dadurch gekennzeichnet, dass*** die Reaktionsräume (3, 21, 22, 31, 32, 33, 34, 41, 42, 43, 44, 53) hintereinander angeordnet sind und das Förderorgan (4, 27, 28, 35, 45, 54) das Material (1, 201, 301, 401, 52) durch mehrere Reaktionsräume (3, 21, 22, 31, 32, 33, 34, 41, 42, 43, 44, 53) zu einem Materialauslass (8, 206, 207, 306, 406, 58) fördert.

8. Verfahren nach Anspruch 7, ***dadurch gekennzeichnet, dass*** die Reaktionsräume (3, 21, 22, 31, 32, 33, 34, 41, 42, 43, 44, 53) jeweils eine Flüssigkeitszufuhr (5, 25, 29, 39, 49. 51) aufweisen und die Flüssigkeitszufuhr (5, 25, 29, 39, 49. 51) zu einem näher am Materialeingang (305) liegenden Reaktionsraum (3, 21, 22, 31, 32, 33, 34, 41, 42, 43, 44, 53) mit Perkolat aus einem weniger nahe am Materialeingang (305) angeordneten Reaktionsraum (3, 21, 22, 31, 32, 33, 34, 41, 42, 43, 44, 53) gespeist wird.

9. Perkolator (2, 20, 30, 40, 50) insbesondere für ein Verfahren nach einem der vorhergehenden Ansprüche mit einer Flüssigkeitszufuhr (5, 25, 29, 39, 49. 51), einem Reaktionsraum (3, 21, 22, 31, 32, 33, 34, 41, 42, 43, 44, 53) für Material (1, 201, 301, 401, 52) mit einem Förderorgan (4, 27, 28, 35, 45, 54), einem Sieb (9, 202, 203, 302, 402, 59) und einem Perkolatauslass (10, 24, 205, 304, 404, 55), ***dadurch gekennzeichnet, dass*** der Reaktionsraum (3, 21, 22, 31, 32, 33, 34, 41, 42, 43, 44, 53) einen Materialauslass (8, 206, 207, 306, 406, 58) aufweist, der derart angeordnet ist, dass das Förderorgan (4, 27, 28, 35, 45, 54) zu ihm Material (1, 201, 301, 401, 52) für eine Entnahme aus dem Reaktionsraum (3, 21, 22, 31, 32, 33, 34, 41, 42, 43, 44, 53) bewegt, wobei das Förderorgan (4, 27, 28) ein Umwälzorgan ist.

10. Perkolator (2, 20) nach Anspruch 9 oder 10, ***dadurch gekennzeichnet, dass*** das Sieb (9, 202, 203) konisch geformt ist.

11. Perkolator (30) nach Anspruch 10, ***dadurch gekennzeichnet, dass*** er mehrere Reaktionsräume (21, 22, 31, 32, 33, 34, 41, 42, 43, 44, 53) aufweist, wobei jeweils eine Flüssigkeitszufuhr (25, 29, 39, 49. 51) zu einem Reaktionsraum (21, 22, 31, 32, 33, 34, 41, 42, 43, 44, 53) mit einem Perkolatauslass (24, 205, 304, 404, 55) eines anderen Reaktionsraumes (21, 22, 31, 32, 33, 34, 41, 42, 43, 44, 53) verbunden ist und die Reaktionsräume (31, 32, 33, 34, 41, 42, 43, 44, 53) linear angeordnet sind und das gleiche Förderorgan (35) aufweisen.

12. Perkolator (40, 50) nach Anspruch 11, ***dadurch gekennzeichnet, dass*** die Reaktionsräume (41, 42, 43, 44, 53) und das Förderorgan (45) waagerecht nebeneinander angeordnet sind und das Förderorgan (54) ein Antrieb zur Bewegung des Siebes (59) ist.

13. Perkolator (30, 40, 50) nach einem der Ansprüche 9 bis 12, ***dadurch gekennzeichnet, dass*** mindestens eine Flüssigkeitszufuhr (25, 39, 49, 51) eines Reaktionsraumes (21, 22, 31, 32, 33, 34, 41, 42, 43, 44, 53) mit einem Perkolatauslass (10, 24, 205, 304, 404, 55) eines anderen Reaktionsraumes (21, 22, 31, 32, 33, 34, 41, 42, 43, 44, 53) in Verbindung steht.

14. Perkolator (30, 40, 50) nach Anspruch 13, ***dadurch gekennzeichnet, dass*** ein Perkolatauslass (10, 24, 205, 304, 404, 55) eines dem Materialauslass (8, 206, 207, 306, 406, 58) näheren Reaktionsraumes (21, 22, 31, 32, 33, 34, 41, 42, 43, 44, 53) mit einer Flüssigkeitszufuhr (25, 29, 39, 49. 51) eines vom Materialauslass (8, 206, 207, 306, 406, 58) weiter entfernten Reaktionsraumes (21, 22, 31, 32, 33, 34, 41, 42, 43, 44, 53) verbunden ist.

15. Perkolator (2, 20, 30, 40, 50) nach einem der Ansprüche 9 bis 14, ***dadurch gekennzeichnet, dass*** der Reaktionsraum (3, 21, 22, 31, 32, 33, 34, 41, 42, 43, 44, 53) einen Deckel aufweist, mit dem er verschließbar ist.
